# FASCICULE DE BREVET EUROPEEN

(11) **EP 4 487 654 B1**
(45) Date de publication et mention de la délivrance du brevet: **11.03.2026**
(21) Numéro de dépôt: 23718289.4
(22) Date de dépôt: 13.04.2023
(51) Int. Cl.: H05B 3/50, B60H 1/22, F24H 3/04, F24H 9/1863

(54) **CORPS DE CHAUFFE D'UN RADIATEUR ÉLECTRIQUE**
HEIZKÖRPER EINES ELEKTRISCHEN HEIZKÖRPERS
HEATING BODY OF AN ELECTRIC RADIATOR

(30) Priorité: 15.04.2022 FR 2203575
(43) Date de publication de la demande: 08.01.2025
(73) Titulaire: VALEO SYSTEMES THERMIQUES, 78320 Le Mesnil-Saint-Denis (FR)
(72) Inventeur: MOULINAS, Frédéric, 78320 Le Mesnil-Saint-Denis (FR); KARAASLAN, Serif, 78320 Le Mesnil-Saint-Denis (FR); LEFLOCH, Jonathan, 78320 Le Mesnil-Saint-Denis (FR); COUAPEL, Yann, 78320 Le Mesnil-Saint-Denis (FR); BRUN, Thomas, 78320 Le Mesnil-Saint-Denis (FR); FRENZEL, Stefan, 96476 Bad Rodach (DE); TELLIER, Laurent, 78570 Le Mesnil-Saint-Denis (FR)
(74) Mandataire: Valeo Powertrain Systems
(86) Numéro de dépôt international: PCT/EP2023/059719
(87) Numéro de publication internationale: WO 2023/198852

(56) Documents cités:
- EP-B1- 1 340 637
- EP-B1- 1 687 572
- US-A- 6 055 360
- US-B2- 7 098 426

## Description

La présente invention s'inscrit dans le domaine des installations de ventilation, de chauffage, et/ou de climatisation de véhicule automobile, et elle concerne plus particulièrement un radiateur électrique de telles installations de ventilation, de chauffage et/ou de climatisation.

Les véhicules automobiles sont généralement équipés d'un système de ventilation, de chauffage et/ou de climatisation permettant de mettre en circulation un flux d'air vers l'habitacle du véhicule automobile, et, selon la température de l'habitacle souhaitée par le conducteur et/ou les passagers du véhicule automobile, chauffer et/ou refroidir le flux d'air envoyé dans l'habitacle. De telles installations de ventilation, de chauffage et/ou de climatisation comprennent ainsi au moins un organe de mise en circulation du flux d'air et un radiateur électrique apte à chauffer le flux d'air mis en circulation vers l'habitacle.

Il est connu que les radiateurs électriques de ces installations de ventilation, de chauffage et/ou de climatisation comprennent un corps de chauffe dans lequel des éléments chauffants, par exemple sous forme de tubes, sont disposés les uns à côté des autres en travers d'un flux d'air à chauffer. De tels radiateurs électriques comprennent généralement au moins un dispositif de contrôle électronique des éléments chauffants comportant une carte de circuits imprimés sur laquelle sont installés différents composants électroniques. Les composants électroniques participent à générer une instruction de commande à transmettre aux éléments chauffants pour qu'ils chauffent. Dès lors, les éléments chauffants sont aptes à monter en température et le flux d'air circulant entre les éléments chauffants du radiateur électrique est chauffé en circulant entre les éléments chauffants.

Les éléments chauffants sont raccordés à la carte de circuits imprimés, le cas échéant par des transistors fixés sur la carte de circuits imprimés, pour que les instructions de commande puissent être transmises aux éléments chauffants.

En étant fixés de la sorte à la carte de circuits imprimés, les éléments chauffants s'étendent principalement selon une direction perpendiculaire à un plan d'extension de la carte de circuits imprimés. Dans cette disposition, chaque élément chauffant est raccordé à la carte de circuits imprimés à l'une de ses extrémités longitudinales, celle la plus proche de la carte de circuits imprimés, et l'ensemble des éléments résistifs au sein des éléments chauffants est alimenté par un même courant électrique passant par ce raccordement, de sorte qu'une quantité sensiblement uniforme de chaleur est dégagée sur toute la dimension d'extension principale de l'élément chauffant.

Il peut être recherché de configurer le corps de chauffe de manière à pouvoir le scinder en plusieurs zones de chauffe particulières. En d'autres termes, il peut être recherché d'alimenter en courant électrique des éléments résistifs présents dans une première zone du corps de chauffe, pour chauffer une partie du flux d'air amené à traverser ce corps de chauffe, et simultanément de laisser inactif d'autres éléments résistifs pour ne pas dépenser d'énergie électrique alors que la partie du flux d'air amené à rencontrer ces autres éléments résistifs n'a pas à être chauffée.

Pour cela, une connexion électrique est nécessaire à chacune des extrémités longitudinales des éléments résistifs, c'est-à-dire à l'extrémité longitudinale proche de la carte de circuits imprimés et également à l'extrémité longitudinale opposée. Dans cette configuration, le raccordement électrique entre l'extrémité longitudinale opposée et la carte de circuits imprimés s'étend à travers le cadre du corps de chauffe. Cette solution n'est pas satisfaisante, car elle expose d'une part ce raccordement électrique au flux d'air circulant à travers le corps de chauffe, et à une potentielle humidification, pouvant entraîner une dégradation de la liaison électrique et, *in fine,* une rupture de raccordement électrique entre la carte de circuits imprimés et les extrémités longitudinales opposées des éléments résistifs et car elle impose d'autre part de diminuer la surface effective de chauffe.

US 7 098 426 B2 décrit un corps de chauffe d'un radiateur électrique selon le préambule de la revendication 1.

La présente invention propose une solution alternative aux solutions déjà existantes en visant un corps de chauffe au sein duquel la disposition du raccordement électrique entre les extrémités longitudinales opposées des éléments résistifs et la carte de circuits imprimés est optimisée pour compacter sur lui-même le corps de chauffe tout en optimisant la zone de chauffe.

Dans ce contexte, la présente invention a pour principal objet un corps de chauffe d'un radiateur électrique, le corps de chauffe comprenant plusieurs éléments chauffants agencés les uns à côtés des autres selon une direction transversale du corps de chauffe, de sorte à délimiter entre eux un espace de circulation d'un flux d'air à chauffer, les éléments chauffants s'étendant selon une direction longitudinale, perpendiculaire à la direction transversale, en présentant une première extrémité longitudinale et une deuxième extrémité longitudinale opposée, au moins l'un des éléments chauffants présentant à chacune de ses extrémités longitudinales au moins un organe de connexion, le corps de chauffe comprenant un premier dispositif de connexion relié à au moins un organe de connexion s'étendant à la première extrémité longitudinale de l'au moins un des éléments chauffants et un deuxième dispositif de connexion relié à au moins un organe de connexion s'étendant à la deuxième extrémité longitudinale de l'au moins un des éléments chauffants, caractérisé en ce qu'un organe de liaison électrique, reliant électriquement le premier dispositif connexion au deuxième dispositif de connexion, est disposé dans un tube de liaison qui s'étend parallèlement à l'au moins un des éléments chauffants.

Le premier dispositif de connexion et le deuxième dispositif de connexion sont ici configurés pour être reliés électriquement aux organes de connexion respectifs s'étendant aux extrémités longitudinales des éléments chauffants. On comprend que les éléments chauffants présentent des organes de connexion à chacun de leurs extrémités longitudinales, et que le premier dispositif de connexion est avantageusement relié aux organes de connexion s'étendant aux premières extrémités longitudinales des éléments chauffants tandis que le deuxième dispositif de connexion est relié aux organes de connexion s'étendant aux deuxièmes extrémités longitudinales des éléments chauffants.

L'organe de liaison est quant à lui relié électriquement à la fois au premier dispositif de connexion et au deuxième dispositif de connexion en s'étendant dans un tube de liaison, configuré pour l'accueillir. On entend ici que l'organe de liaison est protégé par le tube de liaison de l'environnement extérieur, ce qui empêche une dégradation dudit organe de liaison par l'environnement extérieur. Par exemple, le corps de chauffe étant configuré pour chauffer un flux d'air circulant entre les éléments chauffants, de l'humidité peut être transportée par le flux d'air et le tube de liaison dans lequel s'étend l'organe de liaison empêche ici la dégradation dudit organe de liaison.

Le tube de liaison s'étend parallèlement aux éléments chauffants de sorte qu'il peut s'intégrer dans le corps de chauffe sans fausser l'homogénéité du flux d'air à chauffer amené à traverser le corps de chauffe.

De plus, cette disposition particulière de l'organe de liaison au sein d'un espace fermé tel que le tube de liaison permet de limiter l'encombrement du support de cet organe de liaison et ainsi de compacter le corps de chauffe, dans le but d'optimiser le ratio entre l'encombrement du radiateur et la surface efficace du corps de chauffe.

Selon différentes caractéristiques optionnelle de l'invention, prises seules ou en combinaison, on pourra prévoir que :
- le tube de liaison et les éléments chauffants sont agencés les uns à côtés des autres le long de la direction transversale.
- les éléments chauffants sont logés respectivement dans des tubes de chauffe.
- le tube de liaison est identique à au moins un des tubes de chauffe.
- le tube de liaison et les tubes de chauffe sont installés à équidistance les uns des autres.

Conformément à l'invention, avec un tel agencement où des tubes similaires sont répartis régulièrement avec un de ces tubes qui est utilisé pour loger l'organe de liaison en lieu et place d'un élément chauffant, on offre un excellent compromis entre l'efficacité de chauffe du radiateur et l'encombrement, le flux d'air traversant la zone de chauffe restant homogène puisque les tubes de chauffe et de liaison sont les mêmes et disposés à égale distance, et la zone allouée à la liaison électrique passant en travers du corps de chauffe étant confinée à l'intérieur d'un tube ajusté sur l'organe de liaison.

Selon une autre caractéristique optionnelle de l'invention, le corps de chauffe comprend au moins un premier capot, dans lequel s'étendent au moins en partie les premières extrémités longitudinales des éléments chauffant et le premier dispositif de connexion, et un deuxième capot distinct du premier capot et dans lequel s'étendent au moins en partie les deuxièmes extrémités longitudinales des éléments chauffants et le deuxième dispositif de connexion, le premier capot et le deuxième capot étant disposés longitudinalement de part et d'autre du corps de chauffe. De la sorte, il n'est pas nécessaire de prévoir des parois latérales formant une structure du cadre pour protéger les organes de liaison et on limite ainsi l'encombrement transversal puisque les tubes de liaison sont ajustés autour des organes de liaison.

Selon une autre caractéristique optionnelle de l'invention, le tube configuré pour loger un organe de liaison est disposé à une des extrémités transversales du corps de chauffe.

Selon une autre caractéristique optionnelle de l'invention, le corps de chauffe comprend deux organes de liaison électrique installés chacun dans un tube de liaison, l'un des tubes de liaison étant disposé à une extrémité transversale du corps de chauffe, l'autre tube de liaison étant disposé à l'autre extrémité transversale du corps de chauffe, le premier capot, le deuxième capot et les deux tubes de liaison participant à former un cadre du corps de chauffe. Dans cet agencement, on peut noter que les tubes de liaison sont disposés latéralement pour ne pas former d'interruption dans la surface de chauffe, c'est-à-dire de zones sans tubes de chauffe.

Selon une autre caractéristique optionnelle de l'invention, le tube de liaison est encadré transversalement par deux éléments chauffants. On a ainsi un agencement central du ou des organes de liaison, étant entendu qu'il peut dès lors être avantageux de prévoir un unique tube de liaison dans lequel sont agencés deux organes de liaison, isolés l'un de l'autre, et respectivement reliés à un premier dispositif de connexion propre à chaque organe de liaison.

Selon une autre caractéristique optionnelle de l'invention, l'organe de liaison électrique comprend deux tiges de liaison, s'étendant chacune entre le deuxième dispositif de connexion et le premier dispositif de connexion, et une coque isolante dans laquelle s'étendent les tiges de liaison, la coque isolante étant disposée en regard d'une face interne du tube de liaison.

Selon une autre caractéristique optionnelle de l'invention, la coque isolante comprend une paroi participant à délimiter deux logements, chacune des tiges s'étendant respectivement dans un logement différent, la paroi s'étendant principalement le long de la direction longitudinale en présentant un premier bord longitudinal en regard de l'unité électronique de commande et un deuxième bord longitudinal opposé, les logements débouchant à chacun des bords longitudinaux.

Selon une autre caractéristique optionnelle de l'invention, la coque isolante comprend au moins une patte faisant saillie de l'un des bords longitudinaux de la coque isolante le long d'une direction perpendiculaire à la direction longitudinale, la patte étant configurée pour former une butée d'insertion de la coque isolante dans le tube de liaison.

Selon une autre caractéristique optionnelle de l'invention, la coque isolante comprend au moins un ergot faisant saillie de l'une des faces de la coque isolante et configuré pour être en contact avec une face interne du tube de liaison.

L'invention a également pour objet un radiateur électrique comprenant au moins un corps de chauffe caractérisé selon l'une quelconque des caractéristiques précédentes et une unité électronique de commande logée dans un boîtier et configurée pour alimenter et commander le fonctionnement des éléments chauffants, le corps de chauffe étant fixé au boîtier, le boîtier comprenant une paroi de fond s'étendant dans un plan principal d'extension en regard du corps de chauffe, les éléments chauffants s'étendant perpendiculairement par rapport au plan principal d'extension de la paroi de fond.

L'invention a enfin pour objet un procédé de montage d'un corps de chauffe caractérisé selon l'une quelconque des caractéristiques précédentes, le procédé de montage comprenant une étape d'assemblage de l'organe de liaison dans le tube de liaison, une étape d'assemblage des éléments chauffants et au moins une étape d'assemblage du corps de chauffe au cours de laquelle les organes de connexion des éléments chauffants sont reliés électriquement à l'un ou l'autre des dispositifs de connexion, l'organe de liaison étant relié électriquement au deuxième dispositif de connexion et au premier dispositif de connexion.

Selon une autre caractéristique optionnelle de l'invention, au cours de l'étape d'assemblage de l'organe de liaison dans le tube de liaison, les tiges sont installées dans la coque isolante, puis la coque isolante est installée dans le tube de liaison par translation le long de la direction longitudinale jusqu'à ce que la patte soit en butée contre l'une des extrémités longitudinales du tube de liaison.

Le tube de liaison peut alors cintré pour figer la position en son sein de l'organe de liaison.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'un radiateur électrique selon un aspect de l'invention, rendant notamment visible un corps de chauffe ;
[Fig. 2] est une représentation vue de face du corps de chauffe représenté sur la figure 1, dans lequel sont agencés des tubes de chauffe et au moins un tube de liaison ;
[Fig. 3] est une représentation en perspective d'un tube de liaison du corps de chauffe représenté sur la figure 1 et d'un organe de liaison logé au sein du tube de liaison ;
[Fig. 4] est une coupe transversale du tube de liaison rendant plus particulièrement visible un exemple de structure de l'organe de liaison de la figure 3 ;
[Fig. 5] est une représentation en perspective de l'agencement du tube de liaison et de l'organe de liaison représentés sur la figure 3, ici dans une vue éclatée.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un corps de chauffe selon l'invention. Une direction longitudinale correspond à une direction principale d'allongement d'un tube du corps de chauffe, cette direction longitudinale étant parallèle à un axe longitudinal L d'un repère L, V, T illustré sur les figures. Une direction transversale correspond à une direction le long de laquelle sont disposés côte à côte des éléments chauffants du corps de chauffe, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et l'axe transversal T.

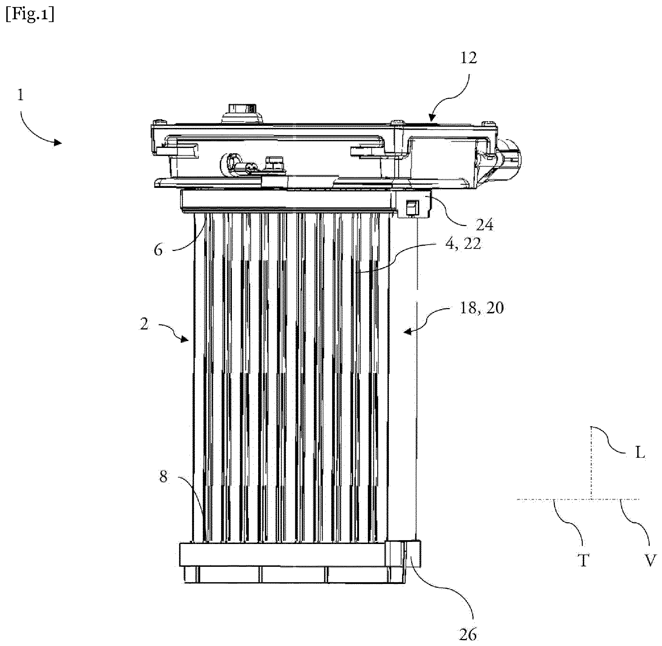

Sur la figure 1 est illustré un radiateur électrique 1 comprenant un corps de chauffe 2 selon l'invention, le radiateur électrique 1 étant lui-même configuré pour être installé dans une installation de ventilation, de chauffage et/ou d'air climatisé. Le radiateur électrique 1 est utilisé dans ce type de d'installation par exemple pour chauffer un flux d'air circulant dans l'installation de ventilation, de chauffage et/ou d'air climatisé à travers le corps de chauffe 2 du radiateur électrique 1.

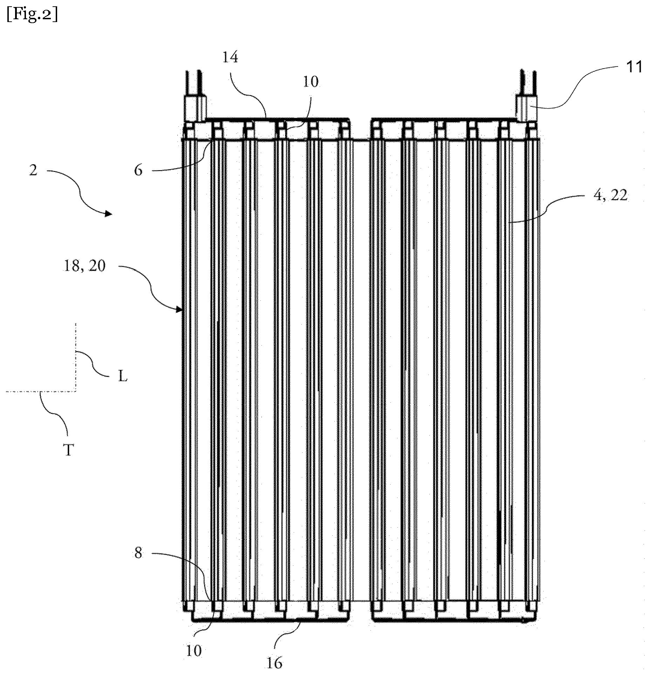

Pour cela, et tel que plus particulièrement visible sur les figures 1 et 2, le corps de chauffe 2 est équipé d'éléments chauffants 4 agencés les uns à côté des autres de sorte à délimiter entre eux un espace de circulation d'un flux d'air à chauffer. Plus particulièrement, chaque élément chauffant 4 est disposé à distance d'au moins un élément chauffant 4 voisin, une portion du flux d'air pouvant circuler entre ces deux éléments chauffants 4 pour être chauffé.

Plus particulièrement, les éléments chauffants 4 sont disposés parallèlement les uns à la suite des autres le long d'une direction transversale T, en s'étendant chacun principalement le long d'une direction longitudinale L perpendiculaire à la direction transversale T. Les éléments chauffants 4 présentent chacun une première extrémité longitudinale 6 et une deuxième extrémité longitudinale 8 opposée.

Au moins l'un des éléments chauffants 4 comprend plusieurs électrodes destinées à alimenter électriquement un matériau résistif pour produire de la chaleur, ces électrodes et le matériau résistif étant logés dans un tube de chauffe 22. Chacune des électrodes présente un organe de connexion 10 et les électrodes sont agencées au sein du tube de chauffe 22 de sorte qu'au moins un organe de connexion 10 est disposé à chacune des extrémités longitudinales des éléments chauffants 4. Ces organes de connexion 10 sont notamment configurés pour être reliés électriquement à une carte de circuits imprimés du radiateur électrique 1.

Le radiateur électrique 1 comprend, tel qu'illustré sur la figure 1, un boîtier électronique 12 dans lequel est logée une telle carte de circuits imprimés destinée à générer et transmettre des instructions de commande aux éléments chauffants 4 du corps de chauffe 2, en partie via les organes de connexion 10 des électrodes. Le boîtier électronique comporte au moins un terminal de raccordement électrique 11, visible sur la figure 2, qui permet de relier de façon étanche la carte de circuits imprimés aux organes de connexion via un dispositif de connexion commun à plusieurs organes de connexion. Un tel dispositif de connexion permet de transmettre simultanément à plusieurs organes de connexion une même instruction de commande, sans qu'il soit nécessaire de raccorder un par un les organes de connexion à la carte de circuits imprimés.

Le corps de chauffe 2 comprend un premier dispositif de connexion 14 relié à au moins un organe de connexion 10 s'étendant à la première extrémité longitudinale 6 d'un des éléments chauffants 4 et un deuxième dispositif de connexion 16 relié à au moins un organe de connexion 10 s'étendant à la deuxième extrémité longitudinale 8 d'un des éléments chauffants 4. Plus particulièrement, tel illustré sur la figure 2, le premier dispositif de connexion 14 est électriquement relié à plusieurs organes de connexion 10 s'étendant aux premières extrémités longitudinales 6 de plusieurs éléments chauffants 4 et le deuxième dispositif de connexion 16 est relié électriquement à plusieurs organes de connexion 10 s'étendant aux deuxièmes extrémités longitudinales 8 de plusieurs éléments chauffants 4.

Selon l'invention, le corps de chauffe 2 comprend un organe de liaison 18 électrique disposé dans un tube de liaison 20, configuré et dimensionné pour loger cet organe de liaison 18, l'organe de liaison 18 électrique étant agencé dans le corps de chauffe pour relier électriquement le premier dispositif de connexion 14 au deuxième dispositif de connexion 16. En d'autres termes, l'organe de liaison 18 est relié électriquement à la fois au premier dispositif de connexion 14 et au deuxième dispositif de connexion 16 en s'étendant dans un tube de liaison 20 configuré pour l'accueillir. L'organe de liaison 18 est protégé par le tube de liaison 20 de l'environnement extérieur, ce qui empêche une dégradation dudit organe de liaison 18 par l'environnement extérieur.

Dans l'exemple illustré sur la figure 2, il est notable que le corps de chauffe comprend deux premiers dispositifs de connexion 14, respectivement reliés à un terminal de raccordement 11, ce qui permet d'alimenter distinctement les éléments chauffants raccordés à l'un ou l'autre des premiers dispositifs de connexion. De façon analogue, le corps de chauffe comporte deux deuxièmes dispositifs de connexion 16, susceptibles d'être alimentés distinctement par la carte de circuits imprimés via l'un ou l'autre des terminaux de raccordement 11 et un organe de liaison 18 logé dans un tube de liaison 20, de manière à alimenter des organes de connexion 10 du côté de la deuxième extrémité longitudinale 8. L'invention doit être comprise aussi bien comme couvrant un corps de chauffe avec un unique premier dispositif de connexion et un unique deuxième dispositif de connexion, et donc un unique organe de liaison logé dans un tube de liaison, que comme couvrant un corps de chauffe avec deux premiers dispositifs de connexion et deux deuxièmes dispositifs de connexion, et tel qu'évoqué deux organes de liaison logés dans un même tube de liaison ou chacun dans leur propre tube de liaison.

Comme particulièrement visible sur la figure 2, le tube de liaison 20 s'étend parallèlement aux éléments chauffants 4, de sorte que le tube de liaison 20 et les éléments chauffants 4 sont agencés les uns à côtés des autres le long de la direction transversale T s'étendant perpendiculairement à la direction longitudinale L.

Il convient de noter que cet empilement du tube de liaison 20 et des éléments chauffants 4 le long de la direction transversale T facilite le montage du corps de chauffe 2 en rassemblant les extrémités du tube de liaison 20 et des éléments chauffants 4 aux mêmes endroits.

Le tube de liaison 20 s'inscrit dans l'alignement transversal régulier des tubes de chauffe 22. Quel que soit la position du tube de liaison par rapport aux tubes de chauffe, l'ensemble des tubes du corps de chauffe est ainsi configuré de sorte que le tube de liaison 20 et les tubes de chauffe sont installés à équidistance les uns des autres. En d'autres termes, une distance mesurée le long d'une direction parallèle à la direction transversale T entre deux tubes voisins, que ce soient des tubes de liaison 20 et/ou des tubes de chauffe 22, est similaire à la distance entre deux autres tubes voisins le long de cette même direction. Cette répartition homogène des tubes du corps de chauffe 2 permet de générer des sections de passage régulière dans le corps de chauffage pour le flux d'air et d'éviter de perturber la circulation de ce flux d'air au travers dudit corps de chauffe 2.

Le tube de liaison 20 peut être disposé transversalement selon plusieurs positions sans sortir du contexte de l'invention. Tel qu'illustré sur la figure 2, le tube de liaison 20 peut notamment être disposé à une des extrémités transversales du corps de chauffe 2. De manière alternative ici non représenté, le tube de liaison 20 peut prendre une position plus centrale dans le corps de chauffe, en étant encadré transversalement par deux éléments chauffants 4. On comprend que dans un positionnement à une extrémité transversale du corps de chauffe, le tube de liaison 20 est décalé pour optimiser le nombre d'éléments chauffants dans le centre du corps de chauffe, tandis que dans un positionnement sensiblement au centre du corps de chauffe 2, le tube de liaison 20 peut participer à délimiter au moins deux zones de chauffe transversales disposées de part et d'autre dudit tube de liaison 20.

Dans un mode de réalisation particulier, illustré sur la figure 2, le corps de chauffe 2 comprend deux organes de liaison électrique 18 installés chacun dans un tube de liaison 20, tel que cela vient d'être décrit, l'un des tubes de liaison 20 étant disposé à une extrémité transversale du corps de chauffe 2 tandis que l'autre tube de liaison 20 est disposé à l'autre extrémité transversale du corps de chauffe 2. On comprend que dans ce mode de réalisation particulier les tubes de liaison 20 sont disposés aux extrémités transversales du corps de chauffe 2 et participent ainsi à délimiter transversalement une zone de chauffe à travers laquelle le flux d'air circule.

De la sorte, l'agencement dudit tube et des éléments chauffants 4 optimise la zone de chauffe du flux d'air au travers du corps de chauffe 2. Cette disposition particulière permet également de compacter le corps de chauffe 2, dans le but de limiter l'espace pris par les différents composants du corps de chauffe 2 au sein du radiateur.

Le corps de chauffe 2 peut comprendre un premier capot 24, dans lequel s'étendent au moins en partie les premières extrémités longitudinales 6 des éléments chauffant et le premier dispositif de connexion 14, et un deuxième capot 26 distinct du premier capot 24 et dans lequel s'étendent au moins en partie les deuxièmes extrémités longitudinales 8 des éléments chauffants 4 et le deuxième dispositif de connexion 16. De la sorte, et tel que cela est visible sur la figure 1, le premier capot 24 et le deuxième capot 26 sont disposés longitudinalement de part et d'autre du corps de chauffe 2 et des tubes 20, 22 participant à définir ce corps de chauffe. Les capots 24, 26 sont ici des organes de recouvrement de chacune des extrémités des tubes, qu'ils soient configurés pour loger un organe de liaison 18 ou un élément chauffant 4, et permettent notamment de rendre étanche les extrémités des tubes de liaison 20 ou des tubes de chauffe 22 de la zone de circulation du flux d'air. Il convient de noter qu'un corps de chauffe 2 comprenant un autre élément en remplacement des capots 24, 26, telles que des parois par exemple, ne sortirait pas du cadre de l'invention.

Selon l'exemple illustré sur la figure 1, où deux tubes de liaison 20 sont disposés aux extrémités transversales du corps de chauffe, le premier capot 24, le deuxième capot 26 et les deux tubes de liaison 20 participant à former un cadre du corps de chauffe 2, en délimitant longitudinalement et transversalement la zone de chauffe à travers laquelle un flux d'air circule.

Quelle que soit la position du tube de liaison 20 par rapport aux tubes de chauffe 22, il est avantageux selon l'invention que le ou les tubes de liaison 20 sont identiques à au moins un des tubes de chauffe 22. Par identique, il convient de comprendre que l'on utilise les mêmes tubes, de même forme et de mêmes dimensions, pour loger les organes de liaison 18 et les éléments chauffants 4. Le fait d'utiliser les mêmes tubes permet de pouvoir monter et positionner facilement les différents tubes du corps de chauffe 2 les uns par rapport aux autres.

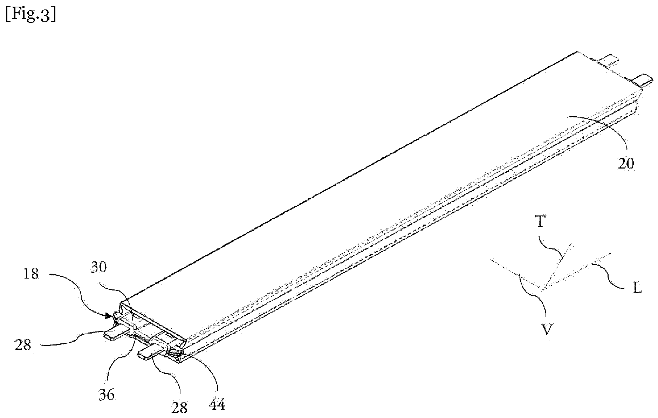

On va maintenant décrire plus en détails l'organe de liaison 18, ainsi que le tube de liaison 20, en référence notamment aux figures 3 à 5.

L'organe de liaison 18 électrique comprend deux tiges de liaison 28, s'étendant chacune entre le deuxième dispositif de connexion 16 et le premier dispositif de connexion 14, et une coque isolante 30 dans laquelle s'étendent les tiges de liaison 28, la coque isolante 30 étant disposée autour des tiges de liaison pour s'interposer entre ces tiges de liaison 28 et une face interne 32 du tube de liaison 20.

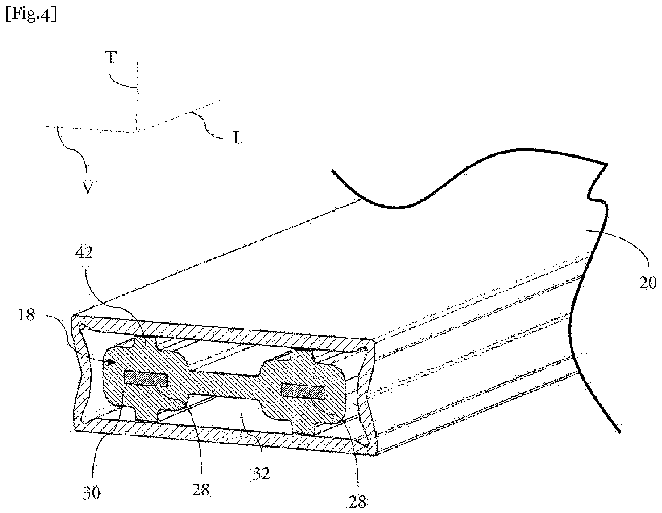

Les tiges de liaison 28 s'étendant parallèlement l'une à l'autre et parallèlement à la direction longitudinale L lorsque l'organe de liaison 18 électrique est disposé dans le corps de chauffe. Elles présentent chacune une section sensiblement rectangulaire vue dans un plan perpendiculaire à la direction longitudinale L, comme visible sur la figure 4. Avantageusement, les tiges de liaison 28 comprennent un matériau métallique qui permet la conduction électrique entre le deuxième dispositif de connexion 16 et le premier dispositif de connexion 14, ou le cas échéant directement entre le deuxième dispositif de connexion 16 et un terminal de raccordement électrique 11, ce matériau métallique pouvant notamment être choisi parmi du cuivre, un alliage de cuivre ou un alliage fer-nickel, parmi lesquels notamment les références suivantes : alloy42, STOL 81, C1100, C2860.

La paroi de la coque isolante 30 s'étend longitudinalement entre un premier bord longitudinal 34 et un deuxième bord longitudinal 36 opposé, de manière à recouvrir quasi intégralement les tiges de liaison 28, à l'exception à chaque bord longitudinal 34, 36 de languettes par lesquelles les tiges de liaison sont raccordées à un dispositif de connexion ou à un organe de raccordement électrique.

La coque isolante 30 est configurée pour délimiter deux logements, chacune des tiges 28 s'étendant respectivement dans un des logements différents. Les logements forment tous les deux une zone étanche pour la tige 28 correspondante, en étant à distance l'un de l'autre, de manière à éviter les faux contacts entre les tiges de liaison 28.

La coque isolante comporte également une portion centrale 38 s'étendant entre les deux logements. Cette portion centrale 38 comprend des barreaux 40 s'étendant à intervalles réguliers entre les deux logements pour rigidifier la coque isolante 30.

Les logements débouchent à chacun des bords longitudinaux 34, 36, les tiges de liaison 28 traversant des orifices du logement dans lequel elles s'étendent respectivement. Les tiges de liaison 28 sont en contact de la paroi au moins au premier bord longitudinal 34 et au deuxième bord longitudinal 36. Plus précisément la paroi réalise un guidage serré des tiges de liaison 28 au niveau des orifices communicant avec les logements des tiges de liaison 28 de sorte à maintenir en position les tiges de liaison 28 par rapport à la coque isolante 30.

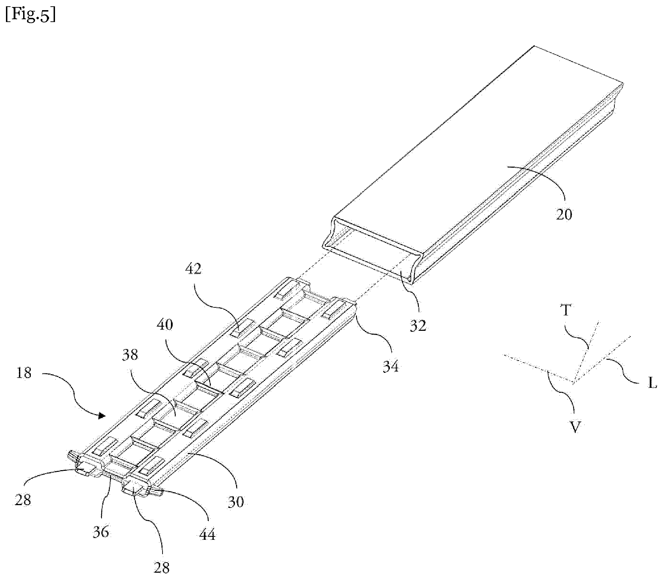

Tel que plus particulièrement visible sur les figures 4 et 5, la coque isolante 30 comprend au moins un ergot 42 faisant saillie de l'une des faces de la coque isolante 30 et configuré pour être en contact avec une face interne 32 du tube de liaison 20. Plus particulièrement, la coque isolante 30 comprend plusieurs ergots 42 faisant saillie de la paroi selon une direction perpendiculaire à la direction longitudinale. Chaque ergot 42 présente une zone d'appui configuré pour être en contact de la face interne 32 du tube de liaison 20. Les ergots 42 ont ici pour fonction de maintenir en position la coque isolante 30 dans le tube de liaison 20 et éviter une possible déformation de ce tube de liaison 20.

De plus, la coque isolante 30 comprend au moins une patte 44 faisant saillie de la coque isolante 30 au niveau de l'un des bords longitudinaux, la patte 44 étant configurée pour former une butée d'insertion de la coque isolante 30 dans le tube de liaison 20. Plus particulièrement, la patte 44 présente une face de butée destinée à être en contact avec l'une des extrémités du tube de liaison 20, comme visible sur la figure 3. Cette patte 44 assure ainsi le positionnement de la coque isolante 30 par rapport au tube de liaison 20 le long de la direction longitudinale, lors du montage de l'organe de liaison 18 dans le tube de liaison 20.

On va maintenant décrire plus en détails un procédé de montage d'un corps de chauffe 2 selon l'invention.

Le procédé de montage comprend une étape d'assemblage de l'organe de liaison 18 dans le tube de liaison 20, une étape d'assemblage des éléments chauffants 4 et au moins une étape d'assemblage du corps de chauffe 2 au cours de laquelle les organes de connexion 10 des éléments chauffants 4 sont reliés électriquement à l'un ou l'autre des dispositifs de connexion, l'organe de liaison 18 étant lui relié électriquement au deuxième dispositif de connexion 16 et au premier dispositif de connexion 14.

Plus particulièrement, au cours de l'étape d'assemblage de l'organe de liaison 18 dans le tube de liaison 20, les tiges de liaison 18 sont installées dans la coque isolante 30, puis la coque isolante 30 et les tiges de liaison 18 sont installées dans le tube de liaison 20 par translation le long de la direction longitudinale L jusqu'à ce que la patte 44 soit en butée contre l'une des extrémités longitudinales du tube de liaison 20.

Lors de l'étape d'assemblage des éléments chauffants 4, les électrodes et le matériau résistif, et par exemple des pierres à effet CTP, sont montés les uns par rapport aux autres pour former un ensemble ensuite installé dans un tube de chauffe 22. Les éléments chauffants 4 sont installés de sorte qu'au moins un organe de connexion 10 des électrodes est disposé à chacune des extrémités longitudinales du tube de chauffe 22.

Une fois l'étape d'assemblage de l'organe de liaison 18 dans le tube de liaison 20 et l'étape d'assemblage des éléments chauffants 4 dans les tubes chauffants 22 réalisés, les tubes 20, 22 sont ensuite disposés parallèlement les uns aux autres en étant reliés électriquement aux dispositifs de connexion.

Pour rappel, l'invention a pour principal objet un corps de chauffe 2 d'un radiateur électrique 1 comprenant des éléments chauffants 4 s'étendant le long d'une direction principale d'extension et présentant un organe de connexion 10 électrique à chacune de leurs extrémités, le corps de chauffe 2 comprenant un organe de liaison 18 électrique entre des dispositifs de connexion 14, 16 s'étendant à chacune des extrémités des éléments chauffants 4 pour connecter électriquement les organes de connexion électrique 10, et le corps de chauffe étant plus particulièrement caractérisé par le positionnement de l'organe de liaison 18 dans un tube disposés de manière adjacentes à d'autres tubes logeant eux les éléments chauffants. Cette disposition de l'organe de liaison 18 dans un tube permet notamment de protéger l'organe de liaison 18 d'un flux d'air circulant au travers du corps de chauffe 2 entre les éléments chauffants 4 et peut permettre de standardiser les moyens mis en œuvre pour protéger l'organe de liaison d'une part et les éléments chauffants d'autre part.

La présente invention ne saurait toutefois se limiter aux moyens et configurations décrits et illustrés ici et elle s'étend également à tout moyen et configuration équivalents ainsi qu'à toute combinaison techniquement opérante de tels moyens.

## Revendications

1. Corps de chauffe (2) d'un radiateur électrique (1), le corps de chauffe (2) comprenant plusieurs éléments chauffants (4) agencés les uns à côtés des autres selon une direction transversale (T) du corps de chauffe, de sorte à délimiter entre eux un espace de circulation d'un flux d'air à chauffer, les éléments chauffants (4) s'étendant selon une direction longitudinale (L), perpendiculaire à la direction transversale (T), en présentant une première extrémité longitudinale (6) et une deuxième extrémité longitudinale (8) opposée, au moins l'un des éléments chauffants (4) présentant à chacune de ses extrémités longitudinales (6, 8) au moins un organe de connexion (10), le corps de chauffe (2) comprenant un premier dispositif de connexion (14) relié à au moins un organe de connexion (10) s'étendant à la première extrémité longitudinale (6) de l'au moins un des éléments chauffants (4) et un deuxième dispositif de connexion (16) relié à au moins un organe de connexion (10) s'étendant à la deuxième extrémité longitudinale (8) de l'au moins un des éléments chauffants (4), **caractérisé en ce qu'**un organe de liaison (18) électrique, reliant électriquement le premier dispositif connexion au deuxième dispositif de connexion ou reliant électriquement le deuxième dispositif de connexion à un terminal de raccordement électrique (11), est disposé dans un tube de liaison (20) qui s'étend parallèlement à l'au moins un des éléments chauffants.

2. Corps de chauffe (2) selon la revendication précédente, dans lequel le tube de liaison (20) et les éléments chauffants (4) sont agencés les uns à côtés des autres le long de la direction transversale (T).

3. Corps de chauffe (2) selon l'une des revendications précédentes, dans lequel les éléments chauffants (4) sont logés respectivement dans des tubes de chauffe (22).

4. Corps de chauffe (2) selon la revendication précédente, dans lequel le tube de liaison (20) est identique à au moins un des tubes de chauffe (22).

5. Corps de chauffe (2) selon la revendication précédente, dans lequel le tube de liaison (20) et les tubes de chauffe (22) sont installés à équidistance les uns des autres.

6. Corps de chauffe (2) selon l'une quelconque des revendications précédentes et comprenant au moins un premier capot (24), dans lequel s'étendent au moins en partie les premières extrémités longitudinales (6) des éléments chauffants (4) et le premier dispositif de connexion (14), et un deuxième capot (26) distinct du premier capot (24) et dans lequel s'étendent au moins en partie les deuxièmes extrémités longitudinales (8) des éléments chauffants (4) et le deuxième dispositif de connexion (16), le premier capot (24) et le deuxième capot (26) étant disposés longitudinalement de part et d'autre du corps de chauffe (2).

7. Corps de chauffe (2) selon l'une quelconque des revendications 1 à 6, dans lequel le tube de liaison (20) est disposé à une des extrémités transversales du corps de chauffe (2).

8. Corps de chauffe (2) selon la revendication 6, dans lequel le corps de chauffe (2) comprend deux organes de liaison (18) électrique installés chacun dans un tube de liaison (20), l'un des tubes de liaison (20) étant disposé à une extrémité transversale du corps de chauffe (2), l'autre tube de liaison (20) étant disposé à l'autre extrémité transversale du corps de chauffe (2), le premier capot (24), le deuxième capot (26) et les deux tubes de liaison (20) participant à former un cadre du corps de chauffe (2).

9. Corps de chauffe (2) selon l'une quelconque des revendications 1 à 6, dans lequel le tube de liaison (20) est encadré transversalement par deux éléments chauffants (4).

10. Corps de chauffe (2) selon l'une quelconque des revendications précédentes, dans lequel l'organe de liaison (18) électrique comprend deux tiges de liaison (28), s'étendant chacune entre le deuxième dispositif de connexion (16) et le premier dispositif de connexion (14), et une coque isolante (30) dans laquelle s'étendent les tiges de liaison (28), la coque isolante (30) étant disposée en regard d'une face interne (32) du tube de liaison (20).

11. Corps de chauffe (2) selon la revendication précédente, dans lequel la coque isolante (30) comprend une paroi participant à délimiter deux logements, chacune des tiges (28) s'étendant respectivement dans un logement différent, la paroi s'étendant principalement le long de la direction longitudinale en présentant un premier bord longitudinal (34) et un deuxième bord longitudinal (36) opposé, les logements débouchant à chacun des bords longitudinaux (34, 36).

12. Corps de chauffe (2) selon la revendication précédente, dans lequel la coque isolante (30) comprend au moins une patte (44) faisant saillie de l'un des bords longitudinaux de la coque isolante (30) le long d'une direction perpendiculaire à la direction longitudinale (L), la patte (44) étant configurée pour former une butée d'insertion de la coque isolante (30) dans le tube de liaison (20).

13. Corps de chauffe (2) selon l'une quelconque des revendications 10 à 12, dans lequel la coque isolante (30) comprend au moins un ergot (42) faisant saillie de l'une des faces de la coque isolante (30) et configuré pour être en contact avec une face interne (32) du tube de liaison (20).

14. Radiateur électrique (1) comprenant au moins un corps de chauffe (2) selon l'une quelconque des revendications précédentes et une unité électronique de commande logée dans un boîtier (12) et configurée pour alimenter et commander le fonctionnement des éléments chauffants (4), le corps de chauffe (2) étant fixé au boîtier (12), le boîtier (12) comprenant une paroi de fond s'étendant dans un plan principal d'extension en regard du corps de chauffe (2), les éléments chauffants (4) s'étendant perpendiculairement par rapport au plan principal d'extension de la paroi de fond.

15. Procédé de montage d'un corps de chauffe (2) selon l'une quelconque des revendications 1 à 12, le procédé de montage comprenant une étape d'assemblage de l'organe de liaison (18) dans le tube de liaison (20), une étape d'assemblage des éléments chauffants (4) et au moins une étape d'assemblage du corps de chauffe (2) au cours de laquelle les organes de connexion (10) des éléments chauffants (4) sont reliés électriquement à l'un ou l'autre des dispositifs de connexion (14, 16), l'organe de liaison (18) étant relié électriquement au deuxième dispositif de connexion (16) et au premier dispositif de connexion (14) ou étant relié électriquement au deuxième dispositif de connexion (16) et à un terminal de raccordement électrique (11).

16. Procédé de montage selon la revendication précédente en combinaison avec la revendication 11, durant lequel, au cours de l'étape d'assemblage de l'organe de liaison (18) dans le tube de liaison (20), les tiges (28) sont installées dans la coque isolante (30), puis la coque isolante (30) est installée dans le tube de liaison (20) par translation le long de la direction longitudinale (L) jusqu'à ce que la patte (44) soit en butée contre l'une des extrémités longitudinales du tube de liaison (20).

## Patentansprüche

1. Heizkörper (2) eines elektrischen Radiators (1), wobei der Heizkörper (2) mehrere Heizelemente (4) umfasst, die nebeneinander entlang einer Querrichtung (T) des Heizkörpers angeordnet sind, um zwischen ihnen einen Durchgangsraum für einen zu erwärmenden Luftstrom zu begrenzen, wobei sich die Heizelemente (4) entlang einer Längsrichtung (L) erstrecken, die senkrecht zur Querrichtung (T) verläuft, und ein erstes Längsende (6) und ein gegenüberliegendes zweites Längsende (8) aufweisen, wobei mindestens eines der Heizelemente (4) an jedem seiner Längsenden (6, 8) mindestens ein Anschlussorgan (10) aufweist, wobei der Heizkörper (2) eine erste Verbindungsvorrichtung (14), die mit mindestens einem Anschlussorgan (10) verbunden ist, das sich am ersten Längsende (6) des mindestens einen der Heizelemente (4) erstreckt, und eine zweite Verbindungsvorrichtung (16) umfasst, die mit mindestens einem Anschlussorgan (10) verbunden ist, das sich am zweiten Längsende (8) des mindestens einen der Heizelemente (4) erstreckt, **dadurch gekennzeichnet, dass** ein elektrisches Verbindungsorgan (18), das die erste Verbindungsvorrichtung elektrisch mit der zweiten Verbindungsvorrichtung verbindet oder die zweite Verbindungsvorrichtung elektrisch mit einem elektrischen Anschlussklemme (11) verbindet, in einem Verbindungsrohr (20) angeordnet ist, das parallel zu dem mindestens einen der Heizelemente verläuft.

2. Heizkörper (2) nach dem vorhergehenden Anspruch, wobei das Verbindungsrohr (20) und die Heizelemente (4) entlang der Querrichtung (T) nebeneinander angeordnet sind.

3. Heizkörper (2) nach einem der vorhergehenden Ansprüche, wobei die Heizelemente (4) jeweils in Heizrohren (22) untergebracht sind.

4. Heizkörper (2) nach dem vorhergehenden Anspruch, wobei das Verbindungsrohr (20) mit mindestens einem der Heizrohre (22) identisch ist.

5. Heizkörper (2) nach dem vorhergehenden Anspruch, wobei das Verbindungsrohr (20) und die Heizrohre (22) in gleichem Abstand voneinander installiert sind.

6. Heizkörper (2) nach einem der vorhergehenden Ansprüche und umfassend mindestens eine erste Abdeckung (24), in der sich zumindest teilweise die ersten Längsenden (6) der Heizelemente (4) und die erste Verbindungsvorrichtung (14) erstrecken, und eine zweite Abdeckung (26), die von der ersten Abdeckung (24) getrennt ist und in der sich zumindest teilweise die zweiten Längsenden (8) der Heizelemente (4) und die zweite Verbindungsvorrichtung (16) erstrecken, wobei die erste Abdeckung (24) und die zweite Abdeckung (26) in Längsrichtung auf beiden Seiten des Heizkörpers (2) angeordnet sind.

7. Heizkörper (2) nach einem der Ansprüche 1 bis 6, wobei das Verbindungsrohr (20) an einem der Querenden des Heizkörpers (2) angeordnet ist.

8. Heizkörper (2) nach Anspruch 6, wobei der Heizkörper (2) zwei elektrische Verbindungsorgane (18) umfasst, die jeweils in einem Verbindungsrohr (20) installiert sind, wobei eines der Verbindungsrohre (20) an einem Querende des Heizkörpers (2) angeordnet ist, das andere Verbindungsrohr (20) am anderen Querende des Heizkörpers (2) angeordnet ist, wobei die erste Abdeckung (24), die zweite Abdeckung (26) und die beiden Verbindungsrohre (20) zur Bildung eines Rahmens des Heizkörpers (2) beitragen.

9. Heizkörper (2) nach einem der Ansprüche 1 bis 6, wobei das Verbindungsrohr (20) quer von zwei Heizelementen (4) umrahmt wird.

10. Heizkörper (2) nach einem der vorhergehenden Ansprüche, wobei das elektrische Verbindungsorgan (18) zwei Verbindungsstäbe (28) umfasst, die sich jeweils zwischen der zweiten Verbindungsvorrichtung (16) und der ersten Verbindungsvorrichtung (14) erstrecken, und eine isolierende Hülle (30), in der sich die Verbindungsstäbe (28) erstrecken, wobei die isolierende Hülle (30) gegenüber einer Innenfläche (32) des Verbindungsrohrs (20) angeordnet ist.

11. Heizkörper (2) nach dem vorhergehenden Anspruch, wobei die isolierende Hülle (30) eine Wand umfasst, die zur Begrenzung von zwei Aufnahmen beiträgt, wobei sich jeder der Stäbe (28) jeweils in einer anderen Aufnahme erstreckt, wobei sich die Wand hauptsächlich entlang der Längsrichtung erstreckt und einen ersten Längsrand (34) und einen gegenüberliegenden zweiten Längsrand (36) aufweist, wobei die Aufnahmen an jedem der Längsränder (34, 36) münden.

12. Heizkörper (2) nach dem vorhergehenden Anspruch, wobei die isolierende Hülle (30) mindestens eine Lasche (44) umfasst, die von einem der Längsränder der isolierenden Hülle (30) entlang einer Richtung senkrecht zur Längsrichtung (L) vorsteht, wobei die Lasche (44) konfiguriert ist, um einen Einführanschlag der isolierenden Hülle (30) in das Verbindungsrohr (20) zu bilden.

13. Heizkörper (2) nach einem der Ansprüche 10 bis 12, wobei die isolierende Hülle (30) mindestens einen Vorsprung (42) umfasst, der von einer der Flächen der isolierenden Hülle (30) vorsteht und konfiguriert ist, um mit einer Innenfläche (32) des Verbindungsrohrs (20) in Kontakt zu sein.

14. Elektrischer Radiator (1), umfassend mindestens einen Heizkörper (2) nach einem der vorhergehenden Ansprüche und eine elektronische Steuereinheit, die in einem Gehäuse (12) untergebracht ist und konfiguriert ist, um die Heizelemente (4) mit Strom zu versorgen und deren Betrieb zu steuern, wobei der Heizkörper (2) am Gehäuse (12) befestigt ist, wobei das Gehäuse (12) eine Bodenwand umfasst, die sich in einer Hauptausdehnungsebene gegenüber dem Heizkörper (2) erstreckt, wobei sich die Heizelemente (4) senkrecht zur Hauptausdehnungsebene der Bodenwand erstrecken.

15. Verfahren zur Montage eines Heizkörpers (2) nach einem der Ansprüche 1 bis 12, wobei das Montageverfahren einen Schritt des Zusammenbaus des Verbindungsorgans (18) im Verbindungsrohr (20), einen Schritt des Zusammenbaus der Heizelemente (4) und mindestens einen Schritt des Zusammenbaus des Heizkörpers (2) umfasst, während dessen die Anschlussorgane (10) der Heizelemente (4) elektrisch mit einer der Verbindungsvorrichtungen (14, 16) verbunden werden, wobei das Verbindungsorgan (18) elektrisch mit der zweiten Verbindungsvorrichtung (16) und der ersten Verbindungsvorrichtung (14) verbunden wird oder elektrisch mit der zweiten Verbindungsvorrichtung (16) und einem elektrischen Anschlussklemme (11) verbunden wird.

16. Montageverfahren nach dem vorhergehenden Anspruch in Kombination mit Anspruch 11, bei dem während des Schritts des Zusammenbaus des Verbindungsorgans (18) im Verbindungsrohr (20) die Stäbe (28) in der isolierenden Hülle (30) installiert werden, dann die isolierende Hülle (30) im Verbindungsrohr (20) durch Verschiebung entlang der Längsrichtung (L) installiert wird, bis die Lasche (44) gegen eines der Längsenden des Verbindungsrohrs (20) anschlägt.

## Claims

1. Heating body (2) of an electric radiator (1), the heating body (2) comprising several heating elements (4) arranged next to each other along a transverse direction (T) of the heating body, so as to delimit between them a circulation space for an air flow to be heated, the heating elements (4) extending along a longitudinal direction (L), perpendicular to the transverse direction (T), presenting a first longitudinal end (6) and an opposite second longitudinal end (8), at least one of the heating elements (4) presenting at each of its longitudinal ends (6, 8) at least one connection member (10), the heating body (2) comprising a first connection device (14) connected to at least one connection member (10) extending at the first longitudinal end (6) of the at least one of the heating elements (4) and a second connection device (16) connected to at least one connection member (10) extending at the second longitudinal end (8) of the at least one of the heating elements (4), **characterized in that** an electrical linking member (18), electrically connecting the first connection device to the second connection device or electrically connecting the second connection device to an electrical connection terminal (11), is disposed in a linking tube (20) which extends parallel to the at least one of the heating elements.

2. Heating body (2) according to the preceding claim, wherein the linking tube (20) and the heating elements (4) are arranged next to each other along the transverse direction (T).

3. Heating body (2) according to one of the preceding claims, wherein the heating elements (4) are respectively housed in heating tubes (22).

4. Heating body (2) according to the preceding claim, wherein the linking tube (20) is identical to at least one of the heating tubes (22).

5. Heating body (2) according to the preceding claim, wherein the linking tube (20) and the heating tubes (22) are installed equidistant from each other.

6. Heating body (2) according to any one of the preceding claims and comprising at least a first cover (24), in which extend at least partially the first longitudinal ends (6) of the heating elements (4) and the first connection device (14), and a second cover (26) distinct from the first cover (24) and in which extend at least partially the second longitudinal ends (8) of the heating elements (4) and the second connection device (16), the first cover (24) and the second cover (26) being disposed longitudinally on either side of the heating body (2).

7. Heating body (2) according to any one of claims 1 to 6, wherein the linking tube (20) is disposed at one of the transverse ends of the heating body (2).

8. Heating body (2) according to claim 6, wherein the heating body (2) comprises two electrical linking members (18) each installed in a linking tube (20), one of the linking tubes (20) being disposed at one transverse end of the heating body (2), the other linking tube (20) being disposed at the other transverse end of the heating body (2), the first cover (24), the second cover (26) and the two linking tubes (20) participating in forming a frame of the heating body (2).

9. Heating body (2) according to any one of claims 1 to 6, wherein the linking tube (20) is transversely framed by two heating elements (4).

10. Heating body (2) according to any one of the preceding claims, wherein the electrical linking member (18) comprises two linking rods (28), each extending between the second connection device (16) and the first connection device (14), and an insulating shell (30) in which the linking rods (28) extend, the insulating shell (30) being disposed facing an internal face (32) of the linking tube (20).

11. Heating body (2) according to the preceding claim, wherein the insulating shell (30) comprises a wall participating in delimiting two compartments, each of the rods (28) extending respectively in a different compartment, the wall extending mainly along the longitudinal direction presenting a first longitudinal edge (34) and an opposite second longitudinal edge (36), the compartments opening at each of the longitudinal edges (34, 36).

12. Heating body (2) according to the preceding claim, wherein the insulating shell (30) comprises at least one tab (44) protruding from one of the longitudinal edges of the insulating shell (30) along a direction perpendicular to the longitudinal direction (L), the tab (44) being configured to form an insertion stop for the insulating shell (30) in the linking tube (20).

13. Heating body (2) according to any one of claims 10 to 12, wherein the insulating shell (30) comprises at least one lug (42) protruding from one of the faces of the insulating shell (30) and configured to be in contact with an internal face (32) of the linking tube (20).

14. Electric radiator (1) comprising at least one heating body (2) according to any one of the preceding claims and an electronic control unit housed in a housing (12) and configured to supply and control the operation of the heating elements (4), the heating body (2) being fixed to the housing (12), the housing (12) comprising a bottom wall extending in a main extension plane facing the heating body (2), the heating elements (4) extending perpendicularly to the main extension plane of the bottom wall.

15. Method for assembling a heating body (2) according to any one of claims 1 to 12, the assembly method comprising a step of assembling the linking member (18) in the linking tube (20), a step of assembling the heating elements (4) and at least one step of assembling the heating body (2) during which the connection members (10) of the heating elements (4) are electrically connected to one or the other of the connection devices (14, 16), the linking member (18) being electrically connected to the second connection device (16) and to the first connection device (14) or being electrically connected to the second connection device (16) and to an electrical connection terminal (11).

16. Assembly method according to the preceding claim in combination with claim 11, during which, during the step of assembling the linking member (18) in the linking tube (20), the rods (28) are installed in the insulating shell (30), then the insulating shell (30) is installed in the linking tube (20) by translation along the longitudinal direction (L) until the tab (44) abuts against one of the longitudinal ends of the linking tube (20).
